# FASCICULE DE BREVET EUROPEEN

(11) **EP 3 058 232 B1**
(45) Date de publication et mention de la délivrance du brevet: **04.10.2017**
(21) Numéro de dépôt: 14802324.5
(22) Date de dépôt: 17.10.2014
(51) Int. Cl.: F04D 7/08, F04D 15/00, F04D 29/58, G21C 15/243, H02K 7/02, F04D 13/06, H02K 5/173, H02K 5/20, H02K 7/10, H02K 7/14, H02K 9/19, H02K 7/08, H02K 5/12

(54) **MOTOPOMPE CENTRIFUGE POUR CIRCUIT PRIMAIRE DE PETITS OU MOYENS RÉACTEURS MODULAIRES NUCLÉAIRES**
MOTORISCH ANGETRIEBENE KREISELPUMPE FÜR DEN PRIMÄRKREISLAUF KLEINER UND MITTELGROSSER MODULARER KERNREAKTOREN
MOTOR-DRIVEN CENTRIFUGAL PUMP FOR THE PRIMARY CIRCUIT OF SMALL OR MEDIUM-SIZED MODULAR NUCLEAR REACTORS

(30) Priorité: 17.10.2013 FR 1360133
(43) Date de publication de la demande: 24.08.2016
(73) Titulaire: Clyde Union S.A.S, 74000 Annecy (FR)
(72) Inventeur: MAUVAIS, Stéphane, F-74020 Annecy Cedex (FR); SOUDY, Bruno, F-74020 Annecy Cedex (FR); BRAS, Cécile, F-74020 Annecy Cedex (FR); STIHLE, Sylvain, F-74020 Annecy Cedex (FR); CAREGNATO, Olivier, F-74020 Annecy Cedex (FR)
(74) Mandataire: Collet, Alain
(86) Numéro de dépôt international: PCT/EP2014/072351
(87) Numéro de publication internationale: WO 2015/055833

(56) Documents cités:
- WO-A1-2009/148850
- DE-A1- 3 724 219
- DE-A1- 3 836 563
- FR-A1- 2 573 489

## Description

La présente invention concerne le domaine des groupes motopompes primaires, qui assure le refroidissement du réacteur nucléaire et la circulation d'un fluide caloporteur dans le circuit primaire, et plus particulièrement elle porte sur une architecture de motopompe primaire adaptée aux petits et moyens réacteurs modulaires.

A l'opposé des réacteurs nucléaires les plus puissants, capables de distribuer une puissance électrique supérieure à 1000 MW, la filière des petits et moyens réacteurs modulaires, couramment dénommés SMR pour l'acronyme anglo-saxon *Small Modular Reactors,* connait un essor important. De nombreuses conceptions de réacteurs SMR sont en cours, généralement dans la gamme des 50 à 700 MW (< 300 MW pour les petits réacteurs ; < 700 MW pour les moyens réacteurs). Moins coûteux et plus évolutifs que les installations traditionnelles, les réacteurs SMR constituent une réponse adaptée au besoin croissant en énergie électrique, et en particulier dans les pays en voie de développement.

La construction modulaire des SMR permet une augmentation incrémentielle de la capacité de production, en disposant d'un nombre de modules adapté au besoin. Plus compacts, ils peuvent être partiellement préfabriqués avant transport et assemblage sur le site final d'exploitation. Conçus comme une solution *plug and play,* les installations de réacteurs SMR sont construites plus rapidement, offrant une meilleure flexibilité en termes de financement, d'envergure des travaux d'installation sur le site, de dimensionnement et d'usage final.

Plusieurs types de réacteur sont envisagés pour les réacteurs SMR, en particulier les réacteurs à eau pressurisé (REP), les réacteurs haute température (HTR), ou encore les réacteurs à sels fondus (MSR). Dans les réacteurs REP, l'eau ordinaire qui constitue le fluide caloporteur est maintenue liquide sous haute pression, de l'ordre de 150 bars. Dans le circuit primaire, l'eau récupère la chaleur produite par le combustible nucléaire et la transmet au fluide du circuit secondaire au moyen de générateurs de vapeur. Dans les réacteurs REP intégrés envisagés pour les SMR, un ou plusieurs générateurs de vapeurs sont situés dans la même enceinte que le réacteur. La chaleur du réacteur est transmise par le circuit secondaire vers une turbine à vapeur qui entraine un alternateur chargé de la production de l'électricité.

Une ou plusieurs pompes primaires, comme celles connues par DE 38 36 563 A1 ou WO 2009/148850 A1, assurent la circulation de l'eau dans le circuit primaire, entre le coeur du réacteur et les générateurs de vapeur. La pompe primaire est un composant indispensable au fonctionnement et à la sureté d'une centrale REP. La conception de réacteurs SMR nécessitent de repenser l'architecture de la pompe primaire. En effet, l'architecture du REP intégré disposant dans un module le réacteur, le circuit primaire et les générateurs de vapeur, impose des contraintes nouvelles, tant géométriques, que fonctionnelles, et qu'en matière de durabilité, ou d'exigences de sureté.

L'ambitieux cahier des charges du réacteur, simple, compact, peu coûteux, répondant aux exigences les plus avancées en matière de sureté, est logiquement décliné vers ses constituants. Les pompes primaires existantes sont inadaptées à ce nouveau besoin. A titre d'exemple non limitatif de la présente invention, une motopompe primaire adaptée à un réacteur SMR a pour exigences fonctionnelles une durabilité de 60 ans, une température fluide en entrée de motopompe comprise entre 300 et 350°C, une pression de fonctionnement de 140 à 160 bars, une densité de fluide caloporteur comprise entre 600 et 700 kg/m³, ainsi qu'un ensemble de contraintes géométriques (e.g. montage vertical ou horizontal, enveloppe d'encombrement), de contraintes de montage (e.g. montage par soudure exclu, démontage entièrement réalisable de l'extérieur du réacteur, sans composants restants dans l'enceinte), et de contraintes extérieures (e.g. résistance sismique).

Ainsi, il est désirable de disposer d'une motopompe primaire répondant à ce besoin nouveau et ambitieux. La motopompe primaire adaptée devra être de conception simple, robuste, économique, compatible d'une production en série, répondant aux exigences fonctionnelles et réglementaires les plus exigeantes.

A cet effet, l'invention a pour objet une motopompe centrifuge pour la circulation d'un fluide caloporteur dans un circuit primaire de réacteur nucléaire. La motopompe comprend un groupe moteur étanche, une partie hydraulique, et un arbre immergé dans le fluide caloporteur, entrainé en rotation par le groupe moteur étanche, et pompant le fluide caloporteur au moyen d'un impulseur de la partie hydraulique, solidaire de l'arbre. Le groupe moteur comprend un stator sec et un rotor immergé, monté solidaire sur l'arbre. La motopompe comprend également un volant d'inertie immergé, monté solidaire sur l'arbre, entre le rotor du groupe moteur et l'impulseur de la partie hydraulique, permettant d'assurer une durée de ralentissement minimum lors d'un arrêt d'entrainement en rotation de l'arbre par le groupe moteur ; et un dispositif anti dévirage immergé, configuré pour bloquer mécaniquement la rotation de l'arbre selon un sens prédéterminé.

Avantageusement, le dispositif anti dévirage immergé comprend une partie fixe et une partie mobile solidaire de l'arbre. La partie mobile comprend au moins une cavité en regard de la partie fixe, et au moins un pion mobile, maintenu à l'intérieur de ladite cavité par effet de la force centrifuge, et sortant partiellement de la cavité par effet de la gravité, en dessous d'un seuil prédéterminé de vitesse de rotation de la partie mobile. La partie fixe comprend au moins une rampe constituée de deux plans inclinés, un premier plan de faible pente et un second plan de forte pente. Le dispositif anti dévirage est configuré de façon à ce que, en dessous du seuil de vitesse prédéterminé :
- ledit pion est repoussé dans la cavité par contact avec le plan incliné de faible pente, lorsque la partie mobile tourne dans un sens de rotation autorisé,
- ladite portion de pion en dehors de la cavité bloque la rotation de la partie mobile dans le sens opposé, par contact avec le plan incliné de forte pente.

Avantageusement, la partie mobile du dispositif anti dévirage est aménagée dans le volant d'inertie, formant un sous-ensemble intégré.

Avantageusement, l'au moins un pion est de forme extérieure sensiblement cylindrique selon un axe principal. La cavité présente une forme intérieure adaptée, sensiblement cylindrique selon l'axe principal du pion.

Avantageusement, l'au moins un pion comprend un conduit débouchant sensiblement parallèle à l'axe principal du pion permettant de faciliter l'écoulement du fluide caloporteur à l'intérieur de la cavité lors d'un déplacement dudit pion.

Avantageusement, l'au moins un pion comprend un profil chanfreinés ou un profil arrondi en au moins une extrémité permettant de faciliter la montée dudit pion sur le premier plan, et limiter l'impact entre la partie mobile et la partie fixe.

Avantageusement, le dispositif anti dévirage comprend une pluralité de pions et de cavités aménagés à égales distance de l'axe de rotation de l'arbre et équiréparties angulairement dans la partie mobile, et un même nombre de rampes équiréparties sur la partie fixe, de manière à ce que le blocage en rotation résulte du contact de chacun des pions avec une rampe.

Avantageusement, le dispositif anti dévirage comprend une pluralité de pions et de cavités aménagés à égales distance de l'axe de rotation de l'arbre et équiréparties dans la partie mobile, et un nombre distinct de rampes équiréparties sur la partie fixe, de manière à ce que le blocage en rotation résulte du contact d'un unique pion avec une rampe.

Avantageusement, au moins une portion de surface de l'au moins une rampe, de l'au moins un pion ou de l'au moins une cavité, est renforcée mécaniquement par un procédé de durcissement superficiel.

Avantageusement, au moins une portion de l'au moins une rampe, de l'au moins un pion ou de l'au moins une cavité est constituée d'un alliage métallique présentant une résistance mécanique renforcée.

Avantageusement, la motopompe comprend une barrière thermique entre le groupe moteur et la partie hydraulique, pour isoler thermiquement le groupe moteur du circuit primaire. L'arbre traverse la barrière thermique entre le volant d'inertie et l'impulseur.

Avantageusement, la partie fixe est aménagée sur une surface de la barrière thermique en regard de la partie mobile.

Avantageusement, la motopompe est montée verticalement. L'au moins une cavité est configurée pour permettre un mouvement vertical du pion dans la cavité. Une réduction de la vitesse de rotation sous le seuil prédéterminé entraine la chute de l'ensemble des pions du dispositif anti dévirage.

Avantageusement, la motopompe est montée horizontalement. L'au moins une cavité est configurée pour permettre un mouvement radial du pion dans la cavité. Une réduction de la vitesse de rotation sous le seuil prédéterminé entraine la chute d'une partie des pions du dispositif anti dévirage.

L'invention sera mieux comprise et d'autres avantages apparaîtront à la lecture de la description détaillée des modes de réalisation donnés à titre d'exemple sur les figures suivantes.
Les figures 1a et 1b illustrent une motopompe primaire selon l'invention et son intégration en configuration verticale dans un réacteur SMR,
les figures 2a, 2b et 2c représentent la motopompe primaire selon un mode de réalisation préféré de la présente invention,
la figure 3 décrit un ensemble de paliers mis en oeuvre dans le mode de réalisation préféré de l'invention,
les figures 4a et 4b décrivent un volant d'inertie muni d'une roue à aubes mis en oeuvre dans le mode de réalisation préféré de l'invention,
les figures 5a et 5b décrivent un circuit de refroidissement externe mis en oeuvre dans le mode de réalisation préféré de l'invention,
les figures 6a et 6b illustrent un dispositif anti dévirage mis en oeuvre dans le mode de réalisation préféré de l'invention.

Par souci de clarté, les mêmes éléments porteront les mêmes repères dans les différentes figures.

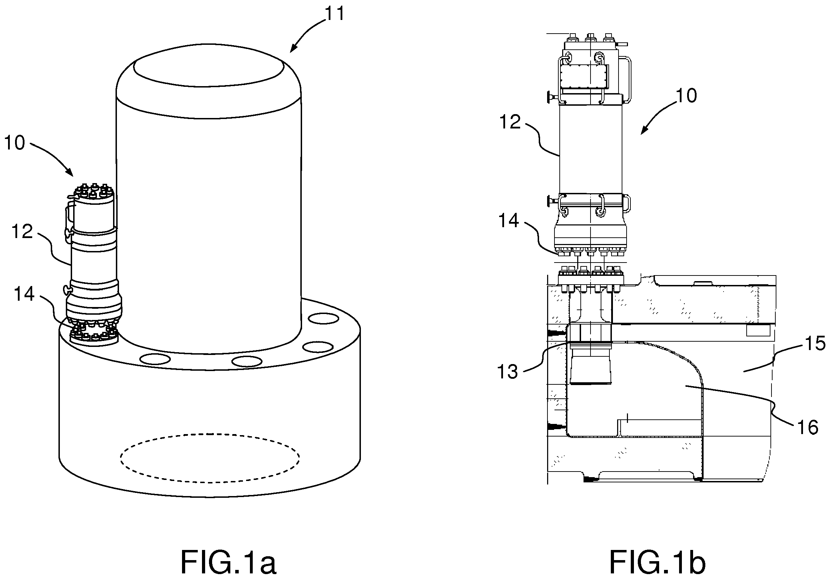

Les figures 1a et 1b illustrent une motopompe primaire selon l'invention et son intégration en configuration verticale dans un réacteur SMR. La figure 1a représente la partie supérieure d'un réacteur 11 et une motopompe primaire 10 selon l'invention. La partie supérieure du réacteur 11 comprend un pressuriseur dans lequel le fluide caloporteur est maintenu à haute pression et haute température sous l'effet de la réaction nucléaire contrôlée dans une partie inférieure du réacteur 11. Le circuit primaire du réacteur comprend une ou plusieurs motopompes qui assurent la circulation du fluide entre le pressuriseur et un ou plusieurs générateurs de vapeur. La partie supérieure du réacteur 11 représentée sur les figures 1a et 1b comprend une partie en forme de dôme et une base sensiblement cylindrique. La figure 1a représente le réacteur 11 muni d'une seule motopompe primaire 10 pour une meilleure lisibilité du schéma. Toutefois, il est envisagé de disposer plusieurs motopompes primaires fixées sur la base sensiblement cylindrique de la partie supérieure du réacteur 11, et autour de celle-ci. Sur la figure 1a, huit motopompes primaires peuvent être disposées autour de la base, les interfaces de connexion des huit pompes sont visibles sur le schéma. Dans cet exemple, la conception du réacteur impose un montage vertical, tête en bas, de la motopompe primaire. La motopompe primaire 10 comprend un groupe moteur 12 et une partie hydraulique 13 séparés par une barrière thermique 14. La base comprend une partie du circuit primaire. Comme représenté sur la figure 1b, les pompes primaires sont reliées à un collecteur commun 15 relié au coeur du réacteur. Le fluide caloporteur est pompé vers une enceinte d'évacuation commune 16 reliée aux générateurs de vapeurs. Notons également que l'intégration de la motopompe dans un environnement très restreint, notamment très proche des parois du réacteur, est une contrainte forte pour la conception de la motopompe, notamment pour l'écoulement du fluide en amont de l'impulseur, dans l'impulseur et en aval de celui-ci.

La motopompe primaire et son intégration sur le réacteur, illustrés par les figures 1 a et 1b, sont présentés à titre d'exemple et ne constitue pas une limitation de la présente invention. Dans cet exemple, la motopompe est en configuration verticale, le fluide caloporteur est de l'eau ordinaire. Plus généralement, l'invention porte sur une motopompe centrifuge pour la circulation d'un fluide caloporteur dans un circuit primaire de réacteur nucléaire.

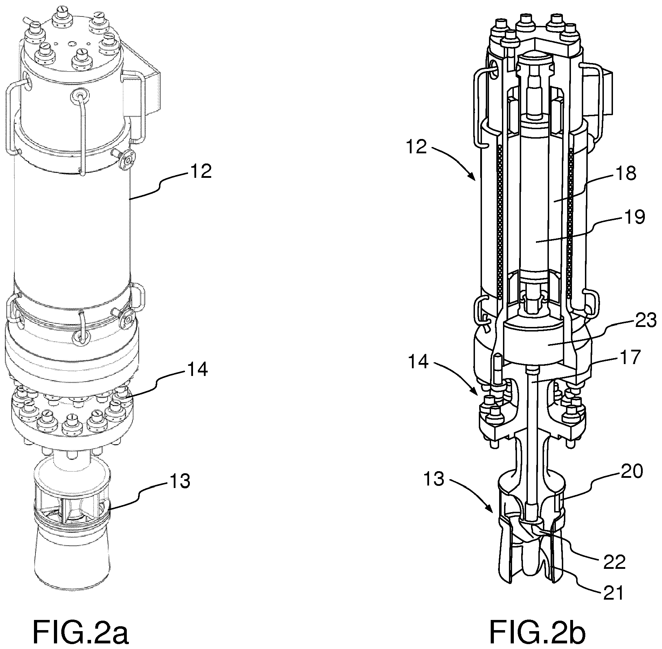

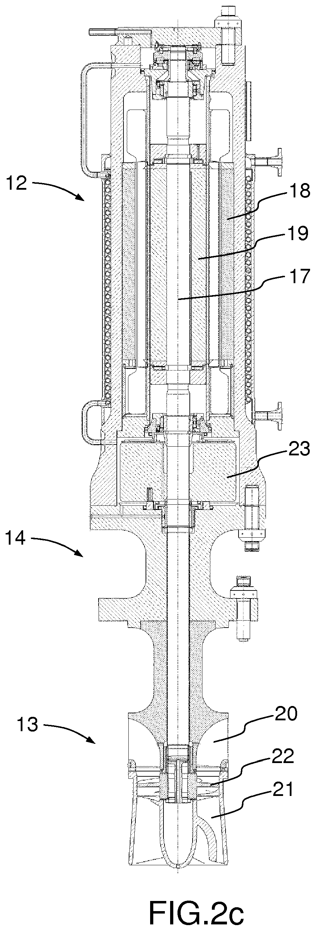

Les figures 2a, 2b et 2c représentent la motopompe primaire selon un mode de réalisation préféré de la présente invention. La motopompe primaire est une motopompe centrifuge qui comprend un groupe moteur étanche 12, une partie hydraulique 13 séparés par une barrière thermique 14. Ces trois éléments sont traversés par un arbre 17 en rotation autour d'un axe longitudinal. L'ensemble mobile en rotation est immergé dans le fluide caloporteur du circuit primaire.

Le groupe moteur 12 comprend un stator sec 18 et un rotor immergé 19 monté solidaire sur l'arbre 17 qui assure l'entrainement en rotation de l'arbre 17 et donc des éléments mobiles de la partie hydraulique 13.

La partie hydraulique 13 comprend un conduit d'aspiration 20, relié au collecteur commun 15, et un conduit d'évacuation 21 relié à l'enceinte d'évacuation commune 16, séparés par un impulseur 22 solidaire de l'arbre. La rotation de l'impulseur 22 entrainé par l'arbre 17 permet le pompage du fluide caloporteur.

La barrière thermique 14 comprend des moyens de fixation de la motopompe sur le réacteur. Ces moyens de fixation sont préférentiellement de type goujon-écrou pour permettre un démontage aisé de la motopompe. La barrière thermique 14 sépare la motopompe entre une partie froide comprenant le groupe moteur 12 et une partie chaude comprenant la partie hydraulique 13 reliée au circuit primaire. Typiquement, une température comprise entre 70°C et 160°C est recherchée en partie froide, tandis que la partie chaude est proche de la température du fluide caloporteur, i.e. comprise entre 300 et 350°C. Pour cela, la motopompe primaire selon l'invention comprend un circuit de refroidissement décrit en détail dans la suite.

Le refroidissement du réacteur est un élément déterminant pour la sureté du réacteur. En cas de défaillance de la motopompe ou du réseau d'alimentation électrique de celle-ci, il est nécessaire de maintenir un débit de fluide significatif pour maintenir un écoulement du fluide caloporteur et donc un refroidissement minimum du réacteur. A titre d'exemple, ce besoin peut être exprimé quantitativement par l'exigence de maintenir un débit supérieur ou égal à 50% du débit nominal 3 secondes après arrêt du moteur par coupure d'alimentation électrique. Il s'avère que l'inertie de l'arbre et du rotor sont insuffisants pour satisfaire ce type d'exigence. Pour cette raison, la motopompe comprend également un volant d'inertie immergé 23 monté solidaire sur l'arbre 17, entre la partie chaude et la partie froide de la motopompe, ou autrement dit entre le rotor 19 du groupe moteur 12 et l'impulseur 22 de la partie hydraulique 13. Le volant d'inertie permet de maintenir un débit de fluide caloporteur suffisant pendant plusieurs secondes après un arrêt ou une défaillance d'alimentation électrique. Avantageusement, le volant d'inertie permet également de lisser la vitesse de rotation de l'arbre 17, et limiter les à coups lors du démarrage ou l'arrêt de la motopompe. Le volant d'inertie constitue aussi une barrière radiologique permettant de limiter les émissions radioactives pouvant s'échapper du réacteur au travers de l'interface de connexion de la motopompe. La définition du volant d'inertie impacte directement l'inertie de l'arbre, les pertes par frottement et donc la puissance du moteur et la capacité du circuit de refroidissement. Il est avantageux de disposer d'un volant d'inertie en forme de disque de forte épaisseur, monté solidaire sur l'arbre, et constitué d'un matériau de forte densité, supérieure à celle de l'acier inoxydable, et préférentiellement supérieur à 8 kg/L. Avantageusement, le volant d'inertie est constitué d'un alliage à base de nickel et de chrome, préférentiellement l'alliage NiCr₂₂Mo₉Nb connu par sa marque déposée Inconel 625.

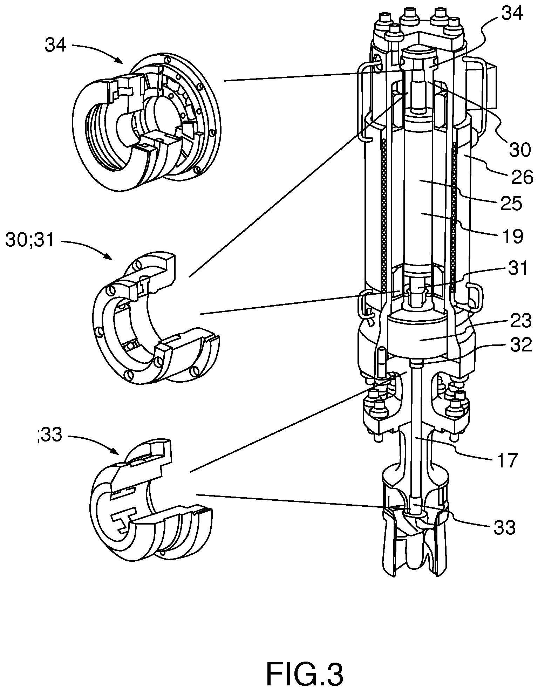

La figure 3 décrit un ensemble de paliers mis en oeuvre dans le mode de réalisation préféré de l'invention permettant d'assurer une dynamique de rotor fiable. L'arbre 17 et les composants qui lui sont reliés, en particulier le rotor 19, le volant d'inertie 23 et l'impulseur 22, forme un ensemble mobile 25 en rotation par rapport à un corps de motopompe 26 constitué des éléments fixes du groupe moteur, de la partie hydraulique et de la barrière thermique 14. L'ensemble mobile 25 est immergé dans le fluide caloporteur qui circule dans la motopompe. La motopompe comprend un ensemble de paliers, lubrifiés par le fluide caloporteur pompé, assurant la rotation de l'ensemble mobile 25 par rapport au corps de motopompe 26. Dans le mode de réalisation préféré représenté sur la figure 3, l'ensemble de paliers comprend :
- un premier palier radial 30 disposé entre le rotor 19 et une extrémité supérieure de l'arbre,
- un second palier radial 31 disposé entre le rotor et le volant d'inertie,
- un troisième palier radial 32 disposé à proximité du volant d'inertie et du côté opposé au second palier par rapport au volant d'inertie,
- un quatrième palier radial 33 disposé à proximité de l'impulseur 22.

Les premier et second paliers radiaux 30 et 31 assurent un guidage en rotation de l'arbre 17 dans une partie fixe du groupe moteur 12. Ils assurent le guidage en rotation du rotor immergé 19 par rapport au stator sec 18. Ces paliers 30 et 31 sont situés dans la partie froide de la motopompe. Avantageusement, les paliers 30 et 31 sont des paliers lisses ou des paliers à patins, et préférentiellement des paliers à patins comprenant cinq patins en carbure de silicium de marque déposée Ekasic, et une douille en acier inoxydable avec traitement de surface en carbure de tungstène.

Les troisième et quatrième paliers radiaux 32 et 33 assurent le guidage en rotation de l'arbre 17 dans une partie fixe de la barrière thermique 14. Ces paliers 32 et 33 sont situés en partie chaude de la motopompe. Avantageusement, les paliers 32 et 33 sont de type paliers hydrostatiques et/ou trilobes. Ils peuvent être constitués d'un alliage de type stellite ou Colmonoy®, ou peuvent comprendre un durcissement superficiel, obtenu au moyen d'un traitement de surface ou au moyen d'un revêtement.

L'ensemble de paliers de la motopompe comprend également un palier axial 34 disposé à proximité du premier palier radial 30 pour bloquer le déplacement axial de l'arbre. Pour permettre un démontage aisé de la motopompe par sa partie supérieure libre d'accès, il est avantageux de disposer le palier axial 34 entre le rotor et l'extrémité supérieure de l'arbre. Avantageusement, le palier axial 34 est constitué d'un palier à patins oscillants, et préférentiellement un palier à patins oscillants comprenant quinze patins en carbure de silicium de marque déposée Ekasic G, et un disque en carbure de silicium de marque déposée Ekasic C.

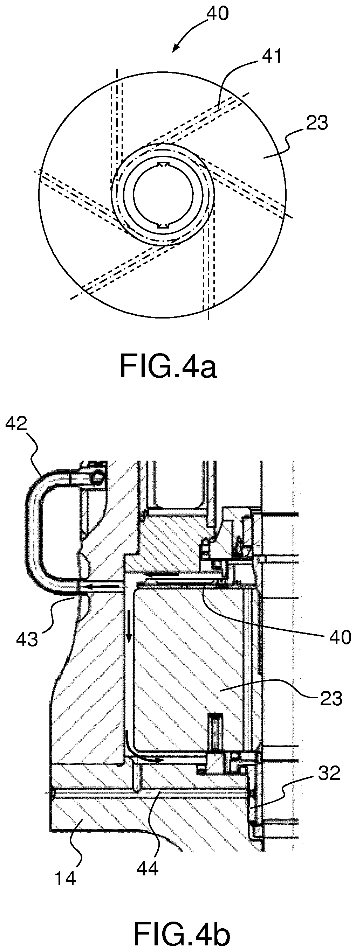

Les figures 4a et 4b décrivent un volant d'inertie muni d'une roue à aubes mis en oeuvre dans le mode de réalisation préféré de l'invention. L'ensemble mobile en rotation est immergé dans le fluide caloporteur. Il se trouve donc naturellement porté à haute température. Les vitesses de rotation relativement élevées de l'arbre (typiquement compris entre 2000 et 4000 tours par minute) génèrent un échauffement au niveau des paliers et plus généralement au niveau des pièces en rotation tels que le volant d'inertie 23 et le rotor immergé 19. Pour cela, il est nécessaire de refroidir la motopompe et notamment le groupe moteur 12. Selon une caractéristique particulièrement avantageuse de la présente invention, le volant d'inertie 23 comprend une roue à aubes 40, qui génère une circulation du fluide caloporteur permettant de refroidir le groupe moteur.

L'idée est d'utiliser la rotation de l'arbre pour générer un mouvement du fluide à proximité des pièces en mouvement à refroidir. Plusieurs modes de réalisation sont envisagées pour cette roue à aubes. Elle peut être constituée de canaux ou de rainures aménagés sur une surface du volant d'inertie. Dans le mode de réalisation préféré de l'invention, comme représenté sur les figures 4a et 4b, la roue à aubes 40 comprend une pluralité d'ailettes rectilignes 41 aménagées sur la surface supérieure du volant d'inertie 23; la surface supérieure du volant d'inertie étant celle orientée en direction du rotor. Elle génère une circulation de fluide symbolisée par les flèches sur la figure 4b. Cette circulation permet d'une part d'alimenter un circuit de refroidissement externe 42 que nous allons décrire par la suite, et d'autre part de générer un flux de fluide autour du volant d'inertie 23, de la partie froide vers la partie chaude de la motopompe. Ce flux de fluide permet notamment de lubrifier le troisième palier radial 32 disposé sous le volant d'inertie. Dans le mode de réalisation préféré représenté sur les figures, le troisième palier est un palier hydrostatique et/ou trilobe. Dans ce cas, un conduit d'alimentation 44 est avantageusement aménagé dans la barrière thermique 14 pour assurer la lubrification par le fluide caloporteur du troisième palier radial 32, au moyen de la circulation de fluide générée par la roue à aubes 40.

La mise en oeuvre de cette circulation de fluide caloporteur générée par une roue à aubes aménagé sur le volant d'inertie est particulièrement avantageuse, car elle permet à la fois le refroidissement direct de certains composants, la lubrification de paliers, et l'alimentation d'un circuit de refroidissement externe tout en limitant les pertes par friction. Cela permet de séparer efficacement au niveau du volant d'inertie entre une partie froide, i.e. une température de l'ordre de 80°C en surface supérieure du volant d'inertie, et une partie chaude, i.e. une température de l'ordre de 150°C en surface inférieure du volant d'inertie.

Dans une configuration alternative, il est envisagé d'aménager la roue à aubes sur la surface inférieure du volant d'inertie.

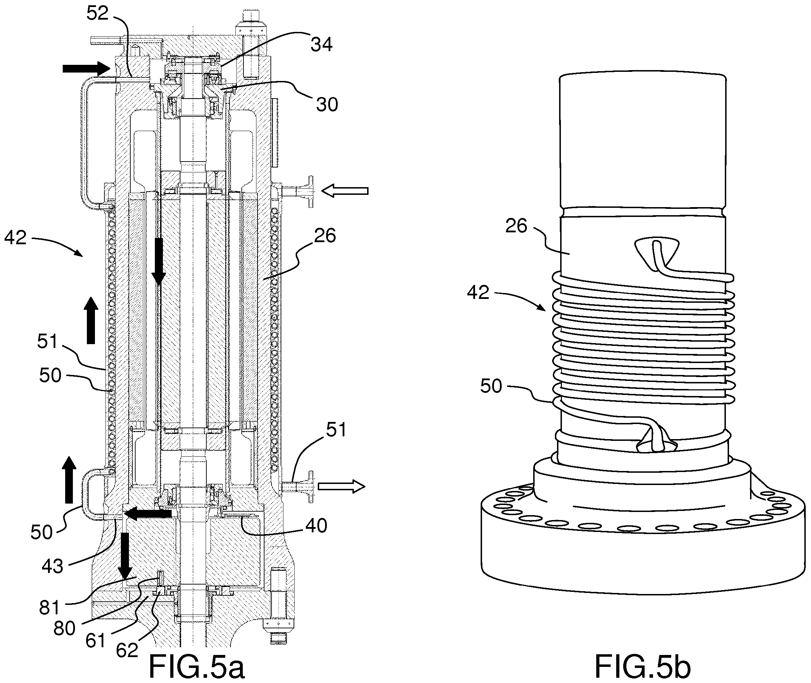

Les figures 5a et 5b décrivent un circuit de refroidissement externe mis en oeuvre dans le mode de réalisation préféré de l'invention. Le circuit de refroidissement externe 42 dans lequel circule le fluide caloporteur entrainé par la roue à aubes 40 du volant d'inertie 23. Le circuit de refroidissement 42 comprend un ou plusieurs serpentins 50, enroulés autour du corps de motopompe 26. Le fluide caloporteur qui circule dans l'au moins un serpentin 50 est refroidi au moyen d'un fluide de refroidissement secondaire circulant autour du corps 26 dans une calandre cylindrique 51. Le circuit hydraulique du fluide de refroidissement secondaire, dit circuit secondaire, permettant la mise sous pression et le refroidissement du fluide secondaire, n'est pas représenté. Tout circuit conventionnel est adapté à la présente invention.

Le circuit de refroidissement externe 42 permet à la fois le refroidissement du fluide caloporteur par échange de chaleur au travers de la paroi de l'au moins un serpentin 50, et le refroidissement direct de la motopompe par la paroi du corps de motopompe 26.

L'accélération du fluide caloporteur transmise par la roue à aubes 40 permet d'alimenter l'au moins un serpentin 50, par l'intermédiaire du conduit d'alimentation 43 aménagé dans le corps de motopompe 26. Le fluide caloporteur est refroidi lors de son transport dans le serpentin, il est ensuite réintroduit dans le groupe moteur, à proximité de l'extrémité supérieure du rotor. Avantageusement, le fluide est réintroduit par l'intermédiaire d'un conduit d'alimentation 52 aménagé dans le corps de motopompe 26 en regard du premier palier radial 30 et/ou du palier axial 34. La roue à aubes 40 coopérant avec le circuit de refroidissement externe 42 génère ainsi une boucle de fluide permettant de maintenir le groupe étanche dans une fenêtre de température compatible de son fonctionnement et de sa durabilité. Ce dispositif est à la fois simple et très efficace ; une partie froide maintenue dans une fenêtre de température comprise entre 60 et 100°C est réalisée.

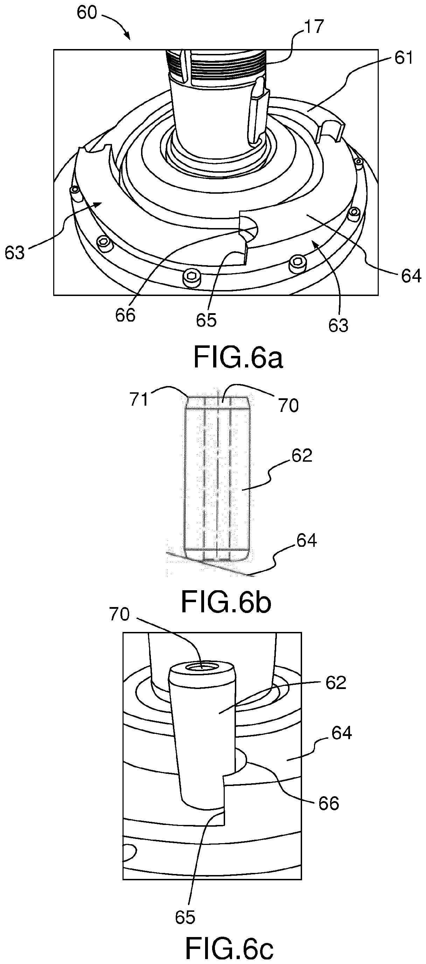

Les figures 6a et 6b décrivent un dispositif anti dévirage immergé mis en oeuvre dans le mode de réalisation préféré de l'invention. La fiabilité de la pompe est un élément fondamental de la sureté de l'installation. Il est nécessaire d'assurer que le sens de pompage ne puisse être inversé lors d'un arrêt volontaire ou non de la pompe. En effet, lorsqu'une motopompe est arrêtée et que les autres tournent encore, la pression au refoulement de celle-ci est plus élevée que la pression à l'aspiration. Un débit inverse traverse la motopompe et l'entraine en rotation inverse. La vitesse peut être élevée et dépasser la limite acceptable, aussi bien sur le plan dynamique, hydraulique que mécanique.

Pour cela, la motopompe selon l'invention comprend un dispositif anti dévirage apte à empêcher mécaniquement la rotation de l'arbre selon un sens prédéterminé. Le dispositif anti dévirage 60, immergé dans le fluide caloporteur, comprend une partie fixe 61 et une partie mobile 81 solidaire de l'arbre. La partie mobile n'est pas représentée sur les figures 6a, 6b et 6c. Dans un mode de réalisation préféré de la présente invention, il s'agit du volant d'inertie 23 précédemment décrit. Dans ce cas, la partie fixe peut être aménagée sur une surface de la barrière thermique 14en regard du volant d'inertie 23. Ce mode de réalisation est représenté sur la figure 5a.

La partie mobile 81 du dispositif anti dévirage 60 comprend au moins une cavité 80 en regard de la partie fixe 61, et au moins un pion mobile 62. Le dispositif anti dévirage 60 est configuré de manière à ce que, dès lors l'arbre 17 est entrainé en rotation avec une vitesse suffisamment élevée, l'au moins un pion mobile 62 est maintenu à l'intérieur de ladite cavité 80 par effet de la force centrifuge. En dessous d'un seuil prédéterminé de vitesse de rotation de la partie mobile 81, le pion mobile 62 retombe par effet de la gravité et sort partiellement de la cavité 80.

La partie fixe 61 comprend au moins une rampe 63 constituée de deux plans inclinés 64 et 65, un premier plan 64 de faible pente et un second plan 65 de forte pente. Sur le mode de réalisation représenté sur les figures 6a, 6b et 6c, le second plan 65 est vertical. Il comprend en outre une empreinte 66 dans laquelle le pion 62 peut s'insérer lorsqu'il retombe par effet de la gravité, dès lors que la vitesse de rotation est suffisamment faible.

Ainsi, le principe du dispositif anti dévirage est le suivant : au démarrage de la motopompe, le pion 62 partiellement inséré dans la cavité 80 est entrainé en rotation selon le sens autorisé, il gravit alors le plan 64 de faible pente avant de retomber dans l'empreinte 66 aménagé dans le plan 65 de forte pente. Lorsque la vitesse de rotation dépasse le seuil prédéterminé, la force centrifuge maintient le pion 62 en position dans la cavité 80. Dès lors que la vitesse décroit sous ce seuil le phénomène inverse se produit, le pion 62 retombe par effet de la gravité. Le cas échéant, une inversion du sens de rotation de l'arbre 17, entraine le pion 62 contre l'empreinte 66 du plan 65. La forte pente du plan 65 (le plan est vertical sur le mode de réalisation représenté sur les figures) empêche le pion 62 de gravir ce plan 65 et bloque ainsi en rotation l'arbre 17 dans le sens non autorisé.

Autrement dit, le dispositif anti dévirage 60 est configuré de façon à ce que, en dessous du seuil de vitesse :
- le pion 62 est repoussé dans la cavité 80 par contact avec le plan incliné 64 de faible pente, lorsque la partie mobile 81 tourne dans un sens de rotation autorisé,
- la portion de pion 62 en dehors de la cavité 80 bloque la rotation par contact avec le plan incliné 65 de forte pente, lorsque la partie mobile 81 tourne dans le sens opposé.

Plusieurs modes de réalisation sont envisagés pour ce dispositif anti dévirage. Dans le mode de réalisation préféré de l'invention représenté sur les figures 6a, 6b et 6c, la partie mobile 81 est aménagée dans le volant d'inertie 23. Une ou préférentiellement plusieurs cavités 80 sont aménagées dans la surface inférieure du volant d'inertie. Les cavités présentent une forme intérieure sensiblement cylindrique selon un axe parallèle à l'axe longitudinal de l'arbre 17. Le dispositif anti dévirage comprend alors autant de pions 62 que de cavités 80. Les pions 62 sont de forme extérieure sensiblement cylindrique selon un axe principal, et adaptée pour coulisser dans la cavité 80 selon l'axe longitudinal par effet de la gravité. De même, une empreinte 66 en arc de cercle est aménagée dans le plan vertical 65 de forme adaptée au pion cylindrique 62.

Comme représenté sur les figures 6b et 6c, les pions 62 peuvent comprendre un conduit débouchant 70, aménagé au centre du pion et sensiblement parallèle à l'axe principal du pion 62. Le conduit débouchant 70 permet de faciliter l'écoulement du fluide caloporteur à l'intérieur de la cavité 80 lors d'un déplacement du pion 62.

L'au moins un pion 62 peut également comprendre en ses deux extrémités longitudinales un profil chanfreiné ou un profil arrondi 71. Le profil chanfreiné, ou le profil arrondi 71 représenté en vue de côté sur la figure 6b, a pour but de casser l'angle droit entre la base du cylindre et une génératrice du cylindre. Cette configuration permet avantageusement de faciliter la montée du pion sur le plan 64 de plus faible pente, et de limiter l'impact entre la partie mobile et la partie fixe 61 en dessous du seuil de vitesse prédéterminé.

Comme mentionné plus haut, il est envisagé un dispositif anti dévirage comprenant une pluralité de cavités 80 et de pions 62. Les cavités 80 sont alors aménagées à égales distances de l'axe de rotation de l'arbre 17 et angulairement équiréparties sur la circonférence de la partie mobile 81. Par exemple, le dispositif comprend quatre cavités 80 comprenant quatre pions 62 aménagés en quatre points cardinaux du volant d'inertie 23.

Il est aussi envisagé un dispositif anti dévirage comprenant un même nombre de cavités 80 et de rampes 63. Les rampes 63 peuvent être aménagées sur la partie fixe 61 en regard des cavités 80 de la partie mobile 81, et angulairement équiréparties sur la circonférence de la partie fixe 61. Dans l'exemple représenté sur la figure 6a, quatre rampes 64 sont aménagées en quatre points cardinaux sur une surface de la barrière thermique 14 en regard du volant d'inertie 23. Ainsi configuré, le blocage en rotation résulte du contact de chacun des pions 62 avec une rampe 65 de la partie fixe. Le couple généré sur l'arbre est avantageusement réparti sur chacun des pions.

Dans une configuration alternative, le dispositif anti dévirage comprend un nombre différent de cavités 80 et de rampes 63. Par exemple, le dispositif comprend les quatre cavités 80 déjà mentionnées et comprend cinq rampes aménagées sur la barrière thermique 14. Dans ce cas le blocage en rotation résulte du contact d'un unique pion 62 avec une unique rampe 65. Cette configuration présente plusieurs avantages. L'augmentation du nombre de rampe 63 permet de réduire l'angle du débattement angulaire de l'arbre avant son blocage en rotation. En outre, en mettant en oeuvre un nombre différent de pions 62 et de rampes 63, le blocage en rotation est assuré par un unique pion 62. Lors d'arrêts successifs de la motopompe, un pion différent peut être sollicité pour le blocage en rotation, permettant de limiter les sollicitations mécaniques sur les pions.

Le dispositif anti dévirage selon l'invention est immergé, ses composants sont exposés à des contraintes mécaniques importantes. Le dispositif doit permettre de s'opposer à un couple important selon le sens de rotation interdit, typiquement de l'ordre de 1000 Nm. Dans les phases d'accélération et de décélération sous le seuil de vitesse prédéterminé, typiquement de l'ordre de 180 tours par minute, les composants doivent pouvoir supporter le choc répétés des pions contre les rampes. Pour répondre à ces contraintes, les pions sont avantageusement constitués d'acier inoxydable ou alternativement d'alliage de type Inconel. Il est aussi envisagé de renforcer mécaniquement au moins une portion de surface des rampes, des pions ou des cavités au moyen d'un procédé de durcissement superficiel. On entend par durcissement superficiel un traitement de surface ou la mise en oeuvre d'un revêtement. Un traitement de surface par procédé PVD, pour l'acronyme anglo-saxon de *Phase Vapor Deposition,* est envisagée.

Notons pour conclure que dans le mode de réalisation représenté sur les figures, la motopompe centrifuge est montée verticalement sur le réacteur. Dans cette configuration, le dispositif anti dévirage 60 comprend des cavités configurées pour permettre un mouvement vertical de leur pion 62. Une réduction de la vitesse de rotation sous le seuil prédéterminé entraine la chute de l'ensemble des pions du dispositif anti dévirage. Ce mode de réalisation n'est pas limitatif de l'invention. Il par exemple aussi envisagé une motopompe centrifuge montée horizontalement ; l'axe de rotation de l'arbre étant horizontal. Dans ce cas, le dispositif anti dévirage comprend des cavités configurées pour permettre un mouvement radial de leur pion. Les pions sont plaqués dans le fond de la cavité par effet de la force centrifuge. Une réduction de la vitesse de rotation sous le seuil prédéterminé entraine la chute d'une partie des pions du dispositif anti dévirage ; les pions situés sous l'axe de l'arbre restant entièrement dans leur cavité. Seuls les pions situés au dessus de l'axe de rotation participent au blocage mécanique de la rotation. Pour cette configuration, on privilégiera un nombre important de cavités, de pions et de rampe.

## Revendications

1. Motopompe centrifuge pour la circulation d'un fluide caloporteur dans un circuit primaire de réacteur nucléaire ; la motopompe comprenant un groupe moteur étanche (12), une partie hydraulique (13), et un arbre (17) immergé dans le fluide caloporteur, entrainé en rotation par le groupe moteur étanche (12), et pompant le fluide caloporteur au moyen d'un impulseur (22) de la partie hydraulique (13), solidaire de l'arbre (17); le groupe moteur (12) comprenant un stator sec (18) et un rotor immergé (19), monté solidaire sur l'arbre (17), **caractérisé en ce que** la motopompe comprend également un volant d'inertie immergé (23), monté solidaire sur l'arbre (17), entre le rotor (19) du groupe moteur (12) et l'impulseur (22) de la partie hydraulique (13), permettant d'assurer une durée de ralentissement minimum lors d'un arrêt d'entrainement en rotation de l'arbre (17) par le groupe moteur (12);
et un dispositif anti dévirage immergé (60), configuré pour bloquer mécaniquement la rotation de l'arbre (17) selon un sens prédéterminé.

2. Motopompe centrifuge selon la revendication 1, dont le dispositif anti dévirage immergé (60) comprend une partie fixe (61) et une partie mobile (81) solidaire de l'arbre (17);
ladite partie mobile (81) comprenant au moins une cavité (80) en regard de la partie fixe (61), et au moins un pion mobile (62), maintenu à l'intérieur de
ladite cavité (80) par effet de la force centrifuge, et sortant partiellement de la cavité (80) par effet de la gravité, en dessous d'un seuil prédéterminé de vitesse de rotation de la partie mobile (81);
ladite partie fixe (61) comprenant au moins une rampe (63) constituée de deux plans inclinés (64, 65), un premier plan (64) de faible pente et un second plan (65) de forte pente ;
le dispositif anti dévirage (60) étant configuré de façon à ce que, en dessous du seuil de vitesse prédéterminé :
- ledit pion (62) est repoussé dans la cavité (80) par contact avec le plan incliné (64) de faible pente, lorsque la partie mobile (81) tourne dans un sens de rotation autorisé,
- ladite portion de pion (62) en dehors de la cavité bloque la rotation de la partie mobile (81) dans le sens opposé, par contact avec le plan incliné (65) de forte pente.

3. Motopompe centrifuge selon la revendication 2, dont la partie mobile du dispositif anti dévirage (60) est aménagée dans le volant d'inertie (23), formant un sous-ensemble intégré.

4. Motopompe centrifuge selon la revendication 2 ou 3, dont l'au moins un pion (62) est de forme extérieure sensiblement cylindrique selon un axe principal; la cavité (80) présentant une forme intérieure adaptée, sensiblement cylindrique selon l'axe principal du pion (62).

5. Motopompe centrifuge selon la revendication 4, dont l'au moins un pion (62) comprend un conduit débouchant (70) sensiblement parallèle à l'axe principal du pion (62) permettant de faciliter l'écoulement du fluide caloporteur à l'intérieur de la cavité (80) lors d'un déplacement dudit pion (62).

6. Motopompe centrifuge selon l'une des revendications 2 à 5, dont l'au moins un pion (62) comprend un profil chanfreinés ou un profil arrondi en au moins une extrémité permettant de faciliter la montée dudit pion (62) sur le premier plan (64) et limiter l'impact entre la partie mobile (81) et la partie fixe (61).

7. Motopompe centrifuge selon l'une des revendications 2 à 6, dont le dispositif anti dévirage (60) comprend une pluralité de pions (62) et de cavités (80) aménagés à égales distance de l'axe de rotation de l'arbre (17) et équiréparties angulairement dans la partie mobile (81), et un même nombre de rampes (63) équiréparties sur la partie fixe (61), de manière à ce que le blocage en rotation résulte du contact de chacun des pions (62) avec une rampe (63).

8. Motopompe centrifuge selon l'une des revendications 2 à 6, dont le dispositif anti dévirage comprend une pluralité de pions (62) et de cavités (80) aménagés à égales distance de l'axe de rotation de l'arbre (17) et équiréparties dans la partie mobile (81), et un nombre distinct de rampes (63) équiréparties sur la partie fixe (61), de manière à ce que le blocage en rotation résulte du contact d'un unique pion (62) avec une rampe (63).

9. Motopompe centrifuge selon l'une des revendications 2 à 8, dont au moins une portion de surface de l'au moins une rampe (63), de l'au moins un pion (62) ou de l'au moins une cavité (80), est renforcée mécaniquement par un procédé de durcissement superficiel.

10. Motopompe centrifuge selon l'une des revendications 2 à 8, dont au moins une portion de l'au moins une rampe (63), de l'au moins un pion (62) ou de l'au moins une cavité (80) est constituée d'un alliage métallique présentant une résistance mécanique renforcée.

11. Motopompe centrifuge selon la revendication 1, comprenant une barrière thermique (14) entre le groupe moteur (12) et la partie hydraulique (13), pour isoler thermiquement le groupe moteur (12) du circuit primaire ; l'arbre (17) traversant la barrière thermique (14) entre le volant d'inertie (23) et l'impulseur (22).

12. Motopompe centrifuge selon les revendications 2, 9 et 11 dont la partie fixe (61) est aménagée sur une surface de la barrière thermique (14) en regard de la partie mobile (81).

13. Motopompe centrifuge selon la revendication 7 ou 8, montée verticalement et dont l'au moins une cavité (80) est configurée pour permettre un mouvement vertical du pion (62) dans la cavité (80).

14. Motopompe centrifuge selon la revendication 7 ou 8, montée horizontalement et dont l'au moins une cavité (80) est configurée pour permettre un mouvement radial du pion (62) dans la cavité (80).

## Patentansprüche

1. Kreiselmotorpumpe für den Umlauf eines Wärmeträgers in einem Kernreaktor-Primärkreis;
wobei die Motorpumpe eine abgedichtete Motorgruppe (12), ein Hydraulikteil (13) und eine in den Wärmeträger eingetauchte, durch die abgedichtete Motorgruppe (12) drehbar angetriebene Welle (17) umfasst, und wobei der Wärmeträger mittels eines Pumpenrads (22) des an der Welle (17) befestigten Hydraulikteils (13) gepumpt wird;
wobei die Motorgruppe (12) einen trockenen Stator (18) und einen auf der Welle (17) fest montierten Tauchrotor (19) umfasst, dadurch charakterisiert,
dass die Motorpumpe zwischen dem Rotor (19) der Motorgruppe (12) und dem Pumpenrad (22) des Hydraulikteils (13) ferner ein auf der Welle (17) fest montiertes Tauchschwungrad (23) umfasst, das eine Mindestauslaufdauer anlässlich eines Drehantriebsausfalls der Welle (17) durch die Motorgruppe (12) zu sichern erlaubt;
und eine Tauchvorrichtung zur Verhinderung von Drehrichtungsumkehr (60), die konfiguriert wird, um die Drehung der Welle (17) gemäß einer vorbestimmten Richtung mechanisch zu sperren.

2. Kreiselmotorpumpe nach Anspruch 1, wobei die Tauchvorrichtung zur Verhinderung von Drehrichtungsumkehr (60) ein festes Teil (61) und ein mit der Welle (17) befestigtes bewegliches Teil (81) umfasst;
wobei das bewegliche Teil (81) dem festen Teil (61) zugewandt mindestens eine Vertiefung (80) und mindestens einen im Inneren der Vertiefung (80) durch die Wirkung der Fliehkraft gehaltenen beweglichen Zapfen (62) umfasst und durch die Wirkung der Schwerkraft unterhalb eines vorgegebenen Schwellenwerts einer Umdrehungsgeschwindigkeit des beweglichen Teils (81) teilweise aus der Vertiefung (80) austritt;
wobei das feste Teil (61) mindestens eine aus zwei geneigten Ebenen (64, 65) gebildete Steigung (63) umfasst, eine erste Ebene (64) mit geringer Steilheit und eine zweite Ebene (65) mit starker Steilheit;
wobei die Vorrichtung zur Verhinderung von Drehrichtungsumkehr (60) so konfiguriert wird, dass unterhalb des vorgegebenen Schwellenwerts der Geschwindigkeit:
- der Zapfen (62) durch Kontakt mit der geneigten Ebene (64) geringer Steilheit in die Vertiefung (80) zurückgestoßen wird, wenn das bewegliche Teil (81) in einer erlaubten Drehrichtung dreht,
- der Anteil des Zapfens (62) außerhalb der Vertiefung die Drehung des beweglichen Teils (81) in der entgegengesetzten Richtung durch Kontakt mit der geneigten Ebene (65) starker Steilheit blockiert.

3. Kreiselmotorpumpe nach Anspruch 2, wobei das bewegliche Teil der Vorrichtung zur Verhinderung von Drehrichtungsumkehr (60) in dem Schwungrad (23) eingerichtet wird, wodurch eine integrierte Unterbaugruppe gebildet wird.

4. Kreiselmotorpumpe nach Anspruch 2 oder 3, wobei der mindestens eine Zapfen (62) gemäß einer Hauptachse im Wesentlichen von zylindrischer Außenform ist; wobei die Vertiefung (80) eine im Wesentlichen zylindrische angepasste Innenform gemäß der Hauptachse des Zapfens (62) aufweist.

5. Kreiselmotorpumpe nach Anspruch 4, wobei der mindestens eine Zapfen (62) einen Mündungskanal (70) umfasst, der im Wesentlichen parallel zu der Hauptachse des Zapfens (62) ist, um leichteren Abfluss des Wärmeträgers im Inneren der Vertiefung (80) anlässlich einer Verschiebung des Zapfens (62) zu erlauben.

6. Kreiselmotorpumpe nach einem der Ansprüche 2 bis 5, wobei der mindestens eine Zapfen (62) ein abgeschrägtes Profil oder ein abgerundetes Profil an mindestens einem äußersten Ende umfasst, das den Anstieg des Zapfens (62) auf die erste Ebene (64) zu erleichtern und die Auswirkung zwischen dem beweglichen Teil (81) und dem festen Teil (61) zu begrenzen erlaubt.

7. Kreiselmotorpumpe nach einem der Ansprüche 2 bis 6, wobei die Vorrichtung zur Verhinderung von Drehrichtungsumkehr (60) eine Vielzahl von Zapfen (62) und von Vertiefungen (80) umfasst, die mit gleichem Abstand von der Drehachse der Welle (17) eingerichtet und in dem beweglichen Teil (81) winklig gleichverteilt und eine selbe Anzahl von Steigungen (63) auf dem festen Teil (61) in einer Weise gleichverteilt werden, dass die Drehsperre durch den Kontakt jedes der Zapfen (62) mit einer Steigung (63) entsteht.

8. Kreiselmotorpumpe nach einem der Ansprüche 2 bis 6, wobei die Vorrichtung zur Verhinderung von Drehrichtungsumkehr eine Vielzahl von Zapfen (62) und von Vertiefungen (80) umfasst, die mit gleichem Abstand von der Drehachse der Welle (17) eingerichtet und in dem beweglichen Teil (81) gleichverteilt und eine unterschiedliche Anzahl von Steigungen (63) auf dem festen Teil (61) in einer Weise gleichverteilt werden, dass die Drehsperre durch den Kontakt eines einzelnen Zapfens (62) mit einer Steigung (63) entsteht.

9. Kreiselmotorpumpe nach einem der Ansprüche 2 bis 8, wobei mindestens ein Anteil der Oberfläche der mindestens einen Steigung (63), des mindestens einen Zapfens (62) oder der mindestens einen Vertiefung (80) mechanisch durch ein Härteverfahren verstärkt wird.

10. Kreiselmotorpumpe nach einem der Ansprüche 2 bis 8, wobei mindestens ein Anteil der mindestens einen Steigung (63), des mindestens einen Zapfens (62) oder der mindestens einen Vertiefung (80) aus einer Metalllegierung besteht, die einen verstärkten mechanischen Widerstand aufweist.

11. Kreiselmotorpumpe nach Anspruch 1, die zwischen der Motorgruppe (12) und dem Hydraulikteil (13) eine Hitzeschranke (14) umfasst, um die Motorgruppe (12) des Primärkreises thermisch zu isolieren; wobei die Welle (17) die Hitzeschranke (14) zwischen dem Schwungrad (23) und dem Pumpenrad (22) durchquert.

12. Kreiselmotorpumpe nach den Ansprüchen 2, 9 und 11, wobei das feste Teil (61) auf einer Oberfläche der Hitzeschranke (14) dem beweglichen Teil zugewandt (81) eingerichtet wird.

13. Kreiselmotorpumpe nach Anspruch 7 oder 8, senkrecht montiert und wobei die mindestens eine Vertiefung (80) konfiguriert wird, um eine Senkrechtbewegung des Zapfens (62) in der Vertiefung (80) zu erlauben.

14. Kreiselmotorpumpe nach Anspruch 7 oder 8, waagerecht montiert und wobei die mindestens eine Vertiefung (80) konfiguriert wird, um eine Radialbewegung des Zapfens (62) in der Vertiefung (80) zu erlauben.

## Claims

1. A motor-driven centrifugal pump for circulating a heat-transfer fluid in a primary circuit of a nuclear reactor,
wherein the motor-driven pump comprises a sealed motor unit (12), a hydraulic section (13) and a shaft (17) immersed in the heat-transfer fluid, which shaft is set into rotation by the sealed motor unit (12), and pumps the heat-transfer fluid by means of an impeller (22) of the hydraulic section (13) that is integral with the shaft (17),
the motor unit (12) comprising a dry stator (18) and an immersed rotor (19) rigidly connected to the shaft (17),
**characterised in that** the motor-driven pump further comprises an immersed flywheel (23) rigidly connected to the shaft (17) between the rotor (19) of the motor unit (12) and the impeller (22) of the hydraulic section (13), allowing a minimum slowing-down duration to be provided when the motor unit (12) stops rotating the shaft (17),
and an immersed anti-backspin device (60) configured to mechanically block the rotation of the shaft (17) in a predetermined direction.

2. The motor-driven centrifugal pump according to claim 1, wherein the immersed anti-backspin device (60) comprises a fixed section (61) and a movable section (81) integral with the shaft (17),
said movable section (81) comprising at least one cavity (80) facing the fixed section (61) and at least one movable pin (62) held inside said cavity (80) under the effect of the centrifugal force and partially exiting the cavity (80) under the effect of gravity, below a predetermined threshold of the rotation speed of the movable section (81),
said fixed section (61) comprising at least one ramp (63) formed by two inclined planes (64, 65), a first low-pitch plane (64) and a second steep-pitch plane (65),
the anti-backspin device (60) being configured so that, below the predetermined speed threshold:
- said pin (62) is pushed back into the cavity (80) through contact with the low-pitch inclined plane (64) when the movable section (81) rotates in an authorised direction of rotation;
- said portion of pin (62) outside the cavity blocks the rotation of the movable section (81) in the opposite direction through contact with the steep-pitch inclined plane (65).

3. The motor-driven centrifugal pump according to claim 2, wherein the movable section of the anti-backspin device (60) is arranged in the flywheel (23), forming an integrated sub-assembly.

4. The motor-driven centrifugal pump according to claim 2 or 3, wherein the at least one pin (62) has a substantially cylindrical external shape along a main axis, the cavity (80) having a matched internal shape that is substantially cylindrical along the main axis of the pin (62).

5. The motor-driven centrifugal pump according to claim 4, wherein the at least one pin (62) comprises a through-duct (70) substantially parallel to the main axis of the pin (62) allowing the flow of the heat-transfer fluid to be facilitated inside the cavity (80) during a movement of said pin (62).

6. The motor-driven centrifugal pump according to any one of claims 2 to 5, wherein the at least one pin (62) comprises a chamfered profile or a rounded profile in at least one end allowing the assembly of said pin (62) on the first plane (64) to be facilitated and limiting the impact between the movable section (81) and the fixed section (61).

7. The motor-driven centrifugal pump according to any one of claims 2 to 6, wherein the anti-backspin device (60) comprises a plurality of pins (62) and cavities (80) arranged at equal distances from the axis of rotation of the shaft (17) and evenly angularly distributed in the movable section (81), and the same number of ramps (63) evenly distributed on the fixed section (61), so that the rotational blocking results from the contact of each of the pins (62) with a ramp (63).

8. The motor-driven centrifugal pump according to any one of claims 2 to 6, wherein the anti-backspin device comprises a plurality of pins (62) and cavities (80) arranged at equal distances from the axis of rotation of the shaft (17) and evenly distributed in the movable section (81), and a distinct number of ramps (63) evenly distributed on the fixed section (61), so that the rotational blocking results from the contact of a single pin (62) with a ramp (63).

9. The motor-driven centrifugal pump according to any one of claims 2 to 8, wherein at least one surface portion of the at least one ramp (63), of the at least one pin (62) or of the at least one cavity (80) is mechanically enhanced by a surface-hardening method.

10. The motor-driven centrifugal pump according to any one of claims 2 to 8, wherein at least one portion of the at least one ramp (63), of the at least one pin (62) or of the at least one cavity (80) is formed by a metal alloy having enhanced mechanical strength.

11. The motor-driven centrifugal pump according to claim 1, comprising a thermal barrier (14) between the motor unit (12) and the hydraulic section (13) for thermally isolating the motor unit (12) from the primary circuit, the shaft (17) passing through the thermal barrier (14) between the flywheel (23) and the impeller (22).

12. The motor-driven centrifugal pump according to claims 2, 9 and 11, wherein the fixed section (61) is arranged on a surface of the thermal barrier (14) facing the movable section (81).

13. The motor-driven centrifugal pump according to either claim 7 or 8, mounted vertically and wherein the at least one cavity (80) is configured to allow a vertical movement of the pin (62) in the cavity (80).

14. The motor-driven centrifugal pump according to either claim 7 or 8, mounted horizontally and wherein the at least one cavity (80) is configured to allow a radial movement of the pin (62) in the cavity (80).
